Europäisches Patentamt

European Patent Office

Office européen des brevets

(11) Veröffentlichungsnummer: **0 682 228 A1**

## EUROPÄISCHE PATENTANMELDUNG

(21) Anmeldenummer: **95250086.6**

(22) Anmeldetag: **06.04.95**

(51) Int. Cl.6: **G01D 5/14**, G01P 3/54, B61L 25/02

(30) Priorität: **03.05.94 DE 4416046**

(43) Veröffentlichungstag der Anmeldung:
**15.11.95 Patentblatt 95/46**

(84) Benannte Vertragsstaaten:
**DE FR GB IT**

(71) Anmelder: **MANNESMANN Aktiengesellschaft**
**Mannesmannufer 2**
**D-40213 Düsseldorf (DE)**

(72) Erfinder: **Flaig, Heinz**
**Gräfin-Imma-Str. 60**
**D-44797 Bochum (DE)**
Erfinder: **Stüwe, Ernst-Werner**
**Buchenstr. 7**
**D-58791 Werdohl (DE)**

(74) Vertreter: **Presting, Hans-Joachim, Dipl.-Ing.**
**et al**
**Meissner & Meissner**
**Patentanwaltsbüro**
**Hohenzollerndamm 89**
**D-14199 Berlin (DE)**

(54) **Einrichtung für die inkrementale Wegmessung, insbesondere für schienengebundene Fahrzeuge.**

(57) Eine Einrichtung für die inkrementale Wegmessung, insbesondere für schienengebundene Fahrzeuge ist mit einer Maßverkörperung (1) und einer gegenüberliegenden relativ bewegten Sensoreinheit (2) ausgestattet, die an eine elektronische Auswerteeinheit (6) angeschlossen ist.

Um teures Magnetmaterial in der Sensoreinheit auf einen vom Fahrzeug mitgeführen Einzelmagneten zu reduzieren und dessen Feld mit einer geeigneten Strukturierung des Fahrweges zu modulieren, wird vorgeschlagen, daß die Maßverkörperung (1) am Fahrweg aus einem gleichmäßig gewellten Maßband (1a) besteht, dessen Oberflächenstruktur (1b) bei einer Relativbewegung in der Sensoreinheit (2) im Zusammenwirken mit dem fahrzeugseitigen Magneten ein wiederkehrendes Signal (2a) erzeugt.

Fig. 1

Rank Xerox (UK) Business Services
(3.10/3.09/3.3.4)

Die Erfindung betrifft eine Einrichtung für die inkrementale Wegmessung, insbesondere für schienengebundene Fahrzeuge, mit einer Maßverkörperung und einer gegenüberliegenden relativ bewegten Sensoreinheit, die an eine elektronische Auswerteeinheit angeschlossen ist.

Es ist bekannt (US 4,924,164), einen Geschwindigkeitssensor für die Ermittlung der aktuellen Geschwindigkeit des Fahrzeuges und einen Sensor für die Ortsbestimmung der absoluten Position des Fahrzeuges entlang der Schienenbahn vorzusehen. Eine Steuerung veranlaßt den Antrieb, das Fahrzeug mit einer auf die absolute Positon bezogenen Geschwindigkeit zu bewegen. Dieser Steuerungs-Wert wird in einem Speicher festgehalten. Die Steuerung treibt den Motor mit der ausgewählten Geschwindigkeit unter Berücksichtigung des Signals der wirklichen Geschwindigkeit, wobei über die Steuerung eine Anpassung der Sollgeschwindigkeit vorgenommen wird. Solche gebräuchlichen magnetischen Wegmeßsysteme benutzen ein Maßband aus abwechselnd gepoltem Magnetmaterial entlang des Fahrweges, das relativ teuer ist und insbesondere bei längeren Fahrwegen von bis zu einigen hundert Metern zu hohen Systemkosten führt. Die bekannte Einrichtung für die inkrementale Wegmessung ist daher nicht nur mit einem Kostennachteil verbunden, sondern einem höheren Aufwand, z.B. bei der Montage.

Der vorliegenden Erfindung liegt die Aufgabe Zugrunde, das teure Magnetmaterial auf einen vom Fahrzeug mitgeführten Einzelmagneten zu reduzieren und dessen Magnetfeld mit einer geeigneten Strukturierung des Fahrweges zu modulieren.

Die gestellte Aufgabe wird auf der Grundlage der eingangs bezeichneten Einrichtung erfindungsgemäß dadurch gelöst, daß die Maßverkörperung am Fahrweg aus einem gleichmäßig gewellten Maßband besteht, dessen Oberflächenstruktur bei einer Relativbewegung in der Sensoreinheit im Zusammenwirken mit dem fahrzeugseitigen Magneten ein wiederkehrendes Signal erzeugt. Dadurch entsteht ein kostengünstig herstellbares und montagefreundliches Maßband, das als Grundlage für ein ausreichend genau arbeitendes Wegmeßsystem dient.

Vorteilhafterweise besteht das Maßband aus Metall. Ein solches Maßband kann in beliebiger Länge hergestellt werden und zeichnet sich durch seine einfache Montage aus.

In Ausgestaltung der Erfindung besteht das Maßband aus magnetisierbarem Stahl. Das Maßband kann daher kostengünstig hergestellt werden.

Als weitere Verbesserung der Erfindung wird vorgeschlagen, daß bei einem magnetischen Sensorsystem der Magnet in der Sensoreinheit angeordnet ist.

Nach der weiteren Erfindung ist vorgesehen, daß das Maßband Teil einer Schleifleitungsanordnung ist. Schienengebundene Fahrzeuge mit Elektroantrieb werden häufig über Schleifleitungen mit Energie versorgt. Es ist daher günstig, in solchen Fällen den Schleifleitungsträger auch für ein Maßband zur Ortsbestimmung zu nutzen. Somit kann ein besonders kostengünstiges Wegmeßsystem geschaffen werden.

In Verbesserung der Erfindung ist vorgesehen, daß der Magnet und ein Magnetfeldsensor innerhalb eines auf dem Maßband gleitenden Schleifkörpers angeordnet ist. Dadurch wird eine geeignete Lagerung, Unterbringung und Führung der Sensoreinheit erreicht.

Nach weiteren Merkmalen wird vorgeschlagen, daß das Maßband leiterförmig ausgestanzt ist. Auch diese Ausführungsform kann sehr kostengünstig hergestellt werden.

Es ist ferner möglich, bei einem optischen Sensorsystem die Oberflächenstruktur des Maßbandes mit einer Infrarot-Dioden-Transistor-Anordnung abzutasten. Die regelmäßige Struktur des Maßbandes kann somit fahrzeugseitig mit magnetischen, optischen oder anderen geeigneten Sensoren erfaßt und durch Zählung zur Positionsermittlung genutzt werden.

Eine weiterhin verbesserte Ausführungsform der Erfindung besteht darin, daß zwei Sensoreinheiten im festen Abstand für eine Fahrtrichtungserkennung bzw. für eine höhere Wegauflösung der wiederkehrenden Signale angeordnet sind.

Dabei ist es vorteilhaft, daß der Abstand zwischen der ersten und der zweiten Sensoreinheit A = $(n + 0,5)$faches der Wellenlänge des Maßbandes beträgt mit $n = 1,2,3 ...$ .

Ein Ausführungsbeispiel der Erfindung ist in der Zeichnung dargestellt und wird im folgenden näher beschrieben.

Es zeigen

Fig. 1     einen Längsschnitt durch das Maßband mit Sensoreinheit und

Fig. 2     die Anordnung des Maßbandes innerhalb einer Schleifleitungsanordnung.

Die Einrichtung für die inkrementale Wegmessung wird z.B. für Krane oder andere schienengebundene Fahrzeuge eingesetzt. Die Hauptbaugruppen sind eine Maßverkörperung 1 und eine Sensoreinheit 2, die an eine elektronische Auswerteeinheit 6 angeschlossen ist. Die Maßverkörperung 1 wird hierbei aus einem gleichmäßig gewellten Maßband 1a gebildet, dessen Oberflächenstruktur 1b in der Sensoreinheit 2 ein wiederkehrendes Signal 2a erzeugt. Das gewellte Maßband 1a kann wie gezeichnet geformt oder auch rechteckförmig hergestellt werden. Die Wellenform kann durch Gießen, Spritzen, Prägen oder andere spanlose Herstellverfahren, aber auch durch spanabhebende Verfahren erzeugt werden.

Die Maßverkörperung 1 kann auch mittels Metallbeschichtungen strukturiert sein. Im allgemeinen besteht das Maßband 1a aus Metall, und zwar z.B. aus magnetisierbarem Stahl. Es kann auch leiterförmig ausgestanzt sein.

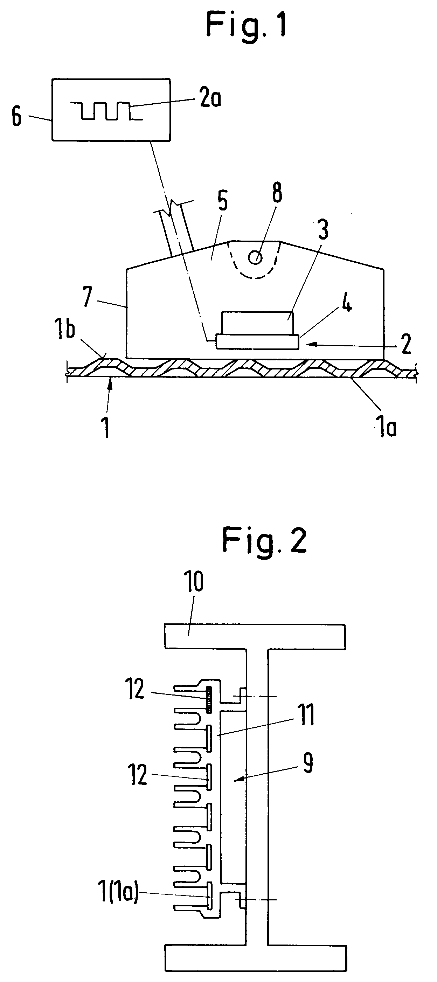

Ein Magnet 3 und ein Magnetfeldsensor 4 sind innerhalb eines Schleifkörpers 5 mit Gehäuse 7 angeordnet, der über ein Gelenk 8 an einem bewegten Fahrzeugrahmen o.dgl. befestigt ist (Fig. 1).

Schienengebundene Fahrzeuge werden häufig über Scheifleitungen mit Energie versorgt. In solchen Fällen ist es vorteilhaft, eine Schleifleitungsanordnung 9 auch für eine Ortsbestimmung zu nutzen (Fig. 2). Das Maßband 1a ist dabei Teil der Schleifleitungsanordnung 9. Der Magnet 3 und der Magnetfeldsensor 4 sind innerhalb des auf dem Maßband 1a gleitenden Schleifkörpers 5 angeordnet.

Der Magnet 3 erzeugt ein Magnetfeld, das durch die Formstruktur des fahrwegseitigen Weicheisenbandes verändert wird. Diese Veränderung wird mit dem Magnetfeldsensor 4, z.B. einem Hall-Sensor, erfaßt und beispielsweise in ein leicht auswertbares Rechtecksingal (wiederkehrendes Signal 2a) umgewandelt. Für eine Fahrtrichtungserkennung und eine höhere Auflösung sind zwei Sensoreinheiten 2 in einem festen Abstand angeordnet (nicht gezeichnet).

Hierbei beträgt der Abstand A = (n + 0,5)-faches der Wellenlänge des Maßbandes 1a mit n = 1,2,3 ... .

Im Ausführungsbeispiel ist entlang einer Fahrschiene 10 ein Tragprofil 11 für Stromversorgungsschienen 12 angeordnet. Eine Spur des Tragprofils 11 nimmt die Maßverkörperung 1 des Wegmeßsystems auf.

Bezugszeichenliste

| | |
|---|---|
| 1 | Maßverkörperung |
| 1a | gewelltes Maßband |
| 1b | Oberflächenstruktur |
| 2 | Sensoreinheit |
| 2a | wiederkehrendes Signal |
| 3 | Magnet |
| 4 | Magnetfeldsensor |
| 5 | Schleifkörper |
| 6 | elektronische Auswerteeinheit |
| 7 | Gehäuse |
| 8 | Gelenk |
| 9 | Schleifleitungsanordnung |
| 10 | Fahrschiene |
| 11 | Tragprofil |
| 12 | Stromversorgungsschiene |

**Patentansprüche**

1. Einrichtung für die inkrementale Wegmessung, insbesondere für schienengebundene Fahrzeuge, mit einer Maßverkörperung und einer gegenüberliegenden relativ bewegten Sensoreinheit, die an eine elektronische Auswerteeinheit angeschlossen ist,
dadurch gekennzeichnet,
daß die Maßverkörperung (1) am Fahrweg aus einem gleichmäßig gewellten Maßband (1a) besteht, dessen Oberflächenstruktur (1b) bei einer Relativbewegung in der Sensoreinheit (2) im Zusammenwirken mit dem fahrzeugseitigen Magneten ein wiederkehrendes Signal (2a) erzeugt.

2. Einrichtung nach Anspruch 1,
dadurch gekennzeichnet,
daß das Maßband (1a) aus Metall besteht.

3. Einrichtung nach einem der Ansprüche 1 oder 2,
dadurch gekennzeichnet,
daß das Maßband (1a) aus magnetisierbarem Stahl besteht.

4. Einrichtung nach einem der Ansprüche 1 bis 3,
dadurch gekennzeichnet,
daß bei einem magnetischen Sensorsystem der Magnet (3) in der Sensoreinheit (2) angeordnet ist.

5. Einrichtung nach einem der Ansprüche 1 bis 4,
dadurch gekennzeichnet,
daß das Maßband (1a) Teil einer Schleifleitungsanordnung (9) ist.

6. Einrichtung nach einem der Ansprüche 1 bis 5,
dadurch gekennzeichnet,
daß der Magnet (3) und ein Magnetfeldsensor (4) innerhalb eines auf dem Maßband (1a) gleitenden Schleifkörpers (5) angeordnet ist.

7. Einrichtung nach einem der Ansprüche 1 bis 6,
dadurch gekennzeichnet,
daß das Maßband (1a) leiterförmig ausgestanzt ist.

8. Einrichtung nach einem der Ansprüche 1 bis 7,
dadurch gekennzeichnet,
daß bei einem optischen Sensorsystem die Oberflächenstruktur (1b) des Maßbandes (1a) mit einer Infrarot-Dioden-Transistor-Anordnung abtastbar ist.

9. Einrichtung nach einem der Ansprüche 1 bis 8,
dadurch gekennzeichnet,

daß zwei Sensoreinheiten (2) im festen Abstand für eine Fahrtrichtungserkennung bzw. eine höhere Wegauflösung der wiederkehrenden Signale angeordnet sind.

10. Einrichtung nach Anspruch 9,
dadurch gekennzeichnet,
daß der Abstand zwischen der ersten und der zweiten Sensoreinheit A = (n + 0,5)faches der Wellenlänge des Maßbandes (1a) beträgt, mit n = 1,2,3 ... .

EP 0 682 228 A1

## Fig. 1

## Fig. 2

5

Europäisches
Patentamt

**EUROPÄISCHER RECHERCHENBERICHT**

Nummer der Anmeldung

EP 95 25 0086

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DE-A-24 31 962 (ALFRED TEVES)<br>* Zusammenfassung; Abbildung 1 *<br>--- | 1-7,9,10 | G01D5/14<br>G01P3/54<br>B61L25/02 |
| Y | DE-A-31 47 819 (HERBERT WEH)<br>* das ganze Dokument *<br>--- | 1-7,9,10 | |
| A | FR-A-2 096 222 (SUMITOMO)<br>* Abbildungen *<br>--- | 1-7 | |
| A | FR-A-2 040 879 (COMPAGNIE GENERALE D'AUTOMATISME)<br>* Abbildungen *<br>----- | 1-10 | |
| | | | **RECHERCHIERTE SACHGEBIETE (Int.Cl.6)**<br><br>G01D<br>G01P<br>B61L |

Der vorliegende Recherchenbericht wurde für alle Patentansprüche erstellt

| Recherchenort | Abschlußdatum der Recherche | Prüfer |
|---|---|---|
| DEN HAAG | 31.August 1995 | Lloyd, P |

EPO FORM 1503 03.82 (P04C03)